Europäisches Patentamt

**European Patent Office**

**Office européen des brevets**

(11) Publication number: **0 206 521**
A2

# EUROPEAN PATENT APPLICATION

(21) Application number: 86303861.8

(22) Date of filing: **21.05.86**

(51) Int. Cl.⁴: **B 23 K 35/00,** B 23 K 35/26, B 32 B 15/01

(30) Priority: **22.05.85 US 736878**

(43) Date of publication of application: **30.12.86**
**Bulletin 86/52**

(84) Designated Contracting States: **DE FR GB IT SE**

(71) Applicant: **THE GARRETT CORPORATION,**
**9851-9951 Sepulveda Boulevard P.O. Box 92248, Los**
**Angeles, California 90009 (US)**

(72) Inventor: **Wendorff, James A., 3607 East Modoc Ct,**
**Phoenix Arizona 85044 (US)**
Inventor: **Bunkoczy, Bela, 615 West Mcnair Street,**
**Chandler Arizona 85224 (US)**
Inventor: **Battin, Walt W., 3121 West Port Au Prince,**
**Phoenix Arizona 85023 (US)**

(74) Representative: **Rees, David Christopher et al, Kilburn &**
**Strode 30 John Street, London WC1N 2DD (GB)**

(54) **Laminate bonding methods for non-ferrous metallic fluidic devices.**

(57)    A laminated aluminium fluidic device (10) is constructed by sequentially coating the facing side surfaces of the aluminium laminae (20a to 20g) with layers of zinc (32), copper (34) and solder (36). The facing pairs of solder layers (36) are positioned in intimate contact, and the coated laminae are heated to fuse the facing solder layers (36) into respective single layers (38).

## Laminate Bonding Methods for Non-Ferrous
## Metallic Fluidic Devices

The present invention relates generally to metal-joining techniques, and more particularly provides a unique method of bonding the aluminium (or other nonferrous metal) laminae of a fluidic device or the like.

Fluidic devices - those devices which use a high velocity fluid jet to perform various sensing or control functions - are frequently formed from a multiplicity of stainless steel laminae which are bonded together by a brazing process. The laminae have various openings formed in and between them which, in the assembled fluidic device body, collectively define intricate internal passages through which the operating fluid flows. To bond the stainless steel laminae together the facing surfaces are first coated with a layer of copper-tin plating. The plated laminae are then stacked, in a predetermined aligned relationship, with the copper-tin surfaces of adjacent laminae in intimate contact. The aligned stack is then heated to approximately 1825$^{\circ}$F (996$^{\circ}$C) to fuse the adjacent copper-tin coatings, thereby bonding the plated laminae into the finished fluidic device.

Because of its lighter weight and lower cost, aluminium is potentially a very desirable alternative laminate material for fluidic devices of the type just described. However, for a variety of reasons, previous attempts to bond thin aluminium fluidic laminae have not resulted in an entirely satisfactory end product. The primary difficulty encountered in applying conventional bonding techniques to aluminium fluidic laminae arises from two design criteria which must be adhered to in manufacturing fludic devices.

Firstly, the internal fluid passages in the assembled device are extremely sensitive to even minute obstructions. Accordingly, the bonding material cannot be permitted to seep into any of the passages during the bonding process. Secondly, even a small degree of laminae warpage during the bonding process can correspondingly distort the precisely configured passages and seriously diminish the overall accuracy of the device.

The first of these design criteria effectively rules out the simple expedient of sweat soldering stacked aluminium laminae together since it would be extremely difficult, if not impossible, to keep the flowing solder out of the internal fluidic passages, while still obtaining a uniform bond between all surfaces of the intricate laminae. Moreover, the difficulties of soldering aluminium components are well known in the metal-joining art. Specifically, conventional solder materials simply do not adhere well to aluminium surfaces.

The copper-tin plating method used to bond stainless steel laminae is equally unsuitable since the plating material, like conventional solder, does not satisfactorily adhere to aluminium. Additionally, even if such copper-tin plating could be suitably applied to aluminium, its melting point is on the order of $1825^{\circ}F$ ($996^{\circ}C$) - well above the approximate melting point of aluminium which is $1140^{\circ}F$ ($615.5^{\circ}C$). Thus, the aluminium laminae would melt before the copper-tin bonding plating could be melted and joined.

Conventional aluminium-to-aluminium bonding techniques such as "cladding" and diffusion bonding have also proven undesirable when applied to fluidic laminae. The cladding method consists of making the aluminium laminae from aluminium sheet having cladding material on its side surfaces which has a melting point (approximately 1000°F) (538°C) that is only slightly lower than the 1140°F (615.5°C) melting point of the underlying laminae. The cladded laminae are then positioned in an aligned stack, and the stack is heated to the cladding melting point to fuse the facing cladding layers. This particular process, however, is quite expensive because of the relatively high cost of the cladding material and the long heat up and hold cycle required to achieve the actual bonding. Additionally, warpage of the laminae stack is very difficult to avoid since the 1000°F (538°C) cladding melting piont is considerably above the softening temperature of the aluminium laminae which is approximately 600°F (315°C).

Diffusion bonding is another conventional approach to securing aluminium laminae together. In this technique, uncoated laminae are positioned face-to-face and are subjected, for a predetermined time period, to a sufficiently high temperature and pressure to cause direct aluminium-to-aluminium fusion between the facing laminae. In the fluidics area, however, this bonding method has proven, like the others discussed above, to be less than wholly satisfactory.

Firstly, diffusion bonding of aluminium is both a relatively difficult and a time-consuming process. The difficulty arises because the facing aluminium surfaces must be kept from oxidising before or during the actual diffusion bonding, however aluminium has a well known propensity for extremely rapid oxidation. To counter this tendency, rather intricate preparation techniques must be employed. Moreover, the time-temperature-pressure interrelationship in the diffusion process must be carefully controlled to prevent warpage of the laminae stack.

More specifically, the diffusion pressure and temperature must be kept at sufficiently low levels to avoid distortion of the stack and its internal passages. With these necessary upper limits on temperature and pressure, the time required to achieve adequate diffusion is greatly increased - in the ordinary instance to several hours for a given laminae stack. This combination of long diffusion "holding periods" and surface preparation difficulties greatly increase the overall manufacturing expense of the fluidic device, thereby rendering diffusion bonding uneconomical for most fluidics applications.

From the foregoing it can be seen that a need exists for an aluminium laminate bonding technique which can be economically operated to produce fludic devices of the type described accurately. It is accordingly an object of the present invention to provide such a technique.

According to the invention, there is provided a method of bonding two non-ferrous metallic laminae characterised by: coating a side surface of each lamina with a sub-base layer; coating each sub-base layer with a layer of a bonding material having a melting point lower than the softening point temperature of the laminae; positioning the bonding material layers in the intimate contact; and fusing the bonding material layers by heating the coated laminae.

Conveniently, a plurality of laminae are bonded together as a stack to produce a non-ferrous metallic fluidic device. The non-ferrous metallic material may be titanium but is preferably aluminium.

Preferably, applying the sub-base layer is performed by sequentially applying layers of zinc and copper to each of the side surfaces. Preferably, the copper is deposited to a thickness of between approximately 0.00010 inch (0.0025mm) and approximately 0.00015 inch (0.0038mm). The bonding material may be indium, in which case it may be electrodeposited on each of the copper layers to a thickness of between approximately 0.000030 inch (0.00076mm) and approximately 0.000060 inch (0.00152mm), e.g. from indium, sulphamate solution using pure indium anodes. Alternatively, the bonding material may be tin, in which case it may be electrodeposited on each of the copper layers to a thickness of between approximately 0.000050 inch (0.00127mm) to approximately 0.000100 inch (0.00254mm).

Preferably the bonding material layers are bonded by a vapour phase soldering process. In the case of indium, the layers are preferably heated to a temperature of between approximately $320^O F$ ($160^O C$) and approximately $350^O$ ($177^O C$) for approximately ten to twenty minutes. In the case of tin, the layers are preferably heated to a temperature of between approximately $450^O F$ ($232^O C$) and approximately $500^O$ ($268^O C$) for approximately ten to twenty minutes.

According to another aspect of the invention, there is provided a method of manufacturing a nonferrous metallic fluidic device comprising the steps of: providing a plurality of nonferrous metallic laminae; applying to each of the side surfaces of the laminae a coating sub-base; coating each of the sub-bases with a layer of a bonding material having a melting point temperature lower than the softening point temperature of the laminae; positioning the bonding material layers in intimate contact; and heating the contacting bonding material layers to a temperature between the said melting point temperature and the said softening point temperature to intersecure the laminae.

According to a more specific aspect of the invention, there may be provided a method of manufacturing a fluid device comprising the steps of: providing a pluraity of nonferrous metallic laminae; zinc immersion coating the side surfaces of the laminae; copper plating the zinc coating to a thickness of from approximately 0.00010 inch (0.0025mm) to approximately 0.00015 inch (0.0038mm); electrodepositing a layer of solder material on the copper plating; positioning the solder layers against one another; and employing a vapour phase solder process to fuse the solder layers to one another.

The invention may also encompass a method of manufacturing an aluminium fluidic device comprising the steps of: providing a plurality of aluminium laminae; securing to each of the side surfaces of the laminae, in a spaced relationship therewith, a metallic bonding material layer having a melting point temperature significantly lower than the softening point temeprature of the laminae; positioning the bonding material layers in intimate contact; and fusing the contacting bonding material layers by heating them to a temperature below the softening point temperature of the laminae.

The invention also extends to any non-ferrous fludic device made by a method in accordance with the present invention as described above.

More specifically the invention may also provide a fluidic device comprising a pluality of nonferrous fluidic laminae having facing side surfaces to each of which are sequentially adhered a layer of zinc, a layer of copper and a layer of solder, the layers of solder being fused to each other.

In carrying out principles of the present invention, in accordance with a preferred embodiment, an aluminium fluidic device may be manufactured by a method comprising the steps of providing a plurailty of aluminium laminae each having side surfaces, sequentially coating the side surfaces with zinc, copper and solder, positioning the solder coatings in intimate contact, and fusing the solder coatings together by heating the coated laminae.

The method of the invention, which is also applicable to other nonferrous metallic laminae such as titanium, eliminates or minimises the problems and disadvantages commonly associated with conventional metallic laminate bonding methods when applied to aluminium. Since the solder is already in place on the coated laminae before they are heated, solder flow into the internal laminae passages is essentially elminated. Additionally, the melting point of the solder is well below the softening temperature of the aluminium laminae, thereby avoiding the problem of stack and passage warpage. Moreover, since conventional solder material is used, which requires a heating time of only a few minutes, the entire bonding process may be inexpensively performed in a relatively short time.

The invention may be carried into practice in various ways and some embodiments will now be described by way of example with reference to the accompanying drawings, in which:-

Figure 1 is a schematic perspective view of a laminated aluminium fluidic device manufactured by a bonding method in accordance with the present invention; and

Figures 2A, 2B and 2C are greatly enlarged scale fragmentary cross-sectional views taken through the device of Figure 1 along the line 2-2, and sequentially illustrate the bonding method.

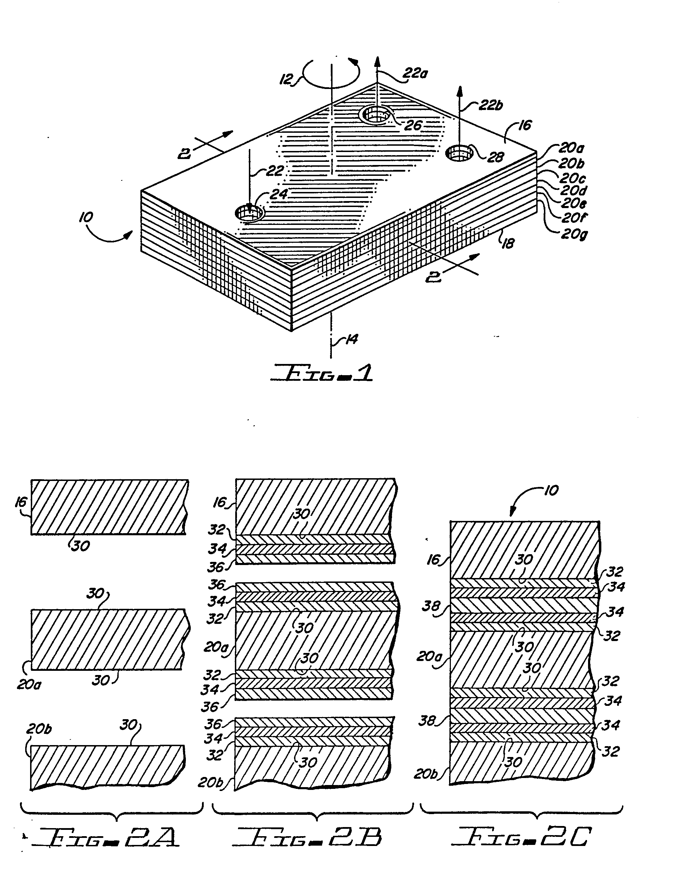

Figure 1 shows a laminated aluminium fluidic device 10 manufactured by a bonding method in accordance with the present invention  The device 10, is an angular rate sensor used to detect the magnitude and sense of angualr rotation 12 of the device about a control axis 14, though this is merely representative of a variety of fluidic devices which can be produced by such a method.

The body of the rate sensor 10 is formed from a multiplicity of thin, intersecured aluminium laminae, inluding an upper lamina 16, a lower lamina 18, and a series of intermediate laminae 20a to 20g.  During operation of the sensor 10, a supply fluid 22 (such as air) is passed into an inlet opening 24 formed in the upper lamina 16.  The intermediate laminae 20a to 20g have various opening formed in them which collectively define an internal passage (not illustrated) within the sensor body.

Within this passage the incoming supply fluid 22 is converted to a high velocity jet which impinges upon, and is divided by, an internal splitter member. The divided jet portions 22a, 22b enter internal receiving passages, each of which communicates with one of two outlet passages 26, 28 which leave the sensor through its upper lamina 16. This jet portions 22a, 22b are respectively discharged through the outlets 26, 28 and are indicative of the rate and sense of the angular rotation 12.

In the absence of angular rotation, the flow rates of the jet portions 22a, 22b (and thus the pressures in outlets 26, 28) are equal. However, when the sensor is subjected to rotation about its control axis 14, the internal fluid jet is shifted relative to the splitter due to the Coriolis effect. This, in turn causes the jet to be unequally divided and results in a pressure differential between the outlets 26, 28. This pressure differential is indicative of both the sense and magnitude of the angular rotation 12.

The operation and general configuration of the rate sensor 10 are conventional, and reference is made to U.S. Patent 4,467,984, entitled "Angular Rate Sensing Apparatus and Methods" for a more complete description thereof. However, as previously mentioned, the illustrated sensor is of a laminated aluminium construction, its laminae being secured together by a unique bonding method which will now be described with reference to Figures 2A, 2B and 2C.

Figure 2A illustrates a portion of the upper three laminae 16, 20a and 20b which, in their stacked relationship, have facing side surfaces 30. The first step in the bonding process, as shown in Figure 2B, is to zincate the facing aluminium side surfaces 30, by a zinc immersion process, resulting in thin zinc coating layers 32 on each of the facing surfaces 30.

A layer of copper plating 34, of a thickness of approximately 0.00010 to 0.00015 inch (0.0025 to 0.0038mm), is then applied to each of the zinc coatings 32. Next, a solder coating 36 is applied to each of the copper coatings. The coatings 32, 34 collectively therefore define a coating sub-base which is readily adherable to aluminium, and to which the solder will readily adhere. This solder coating step is preferably performed by electrodepositing indium, to a thickness of approximaely 0.000030 to 0.000060 inch (0.00076 to 0.00152mm), on the copper coating using an indium sulphamate plating solution and pure indium anodes.

The final step in the actual bonding process consists of positioning the triple-coated aluminium laminae in a properly aligned, stacked relationship (as shown in Figure 2C) with the facing solder coatings in intimate contact. The coated laminae stack is then heated to cause the facing solder coatings 36 to fuse into single, thicker layers of solder 38 to complete the bonding process.

The heating step is preferably carried out using a conventional vapour phase soldering technique in which the aligned laminae stack is exposed to an inert fluorocarbon gas atmosphere at a temperature of approximately 320°F to 350°F (160°C to 177°C) for approximately ten to twenty minutes to fuse the facing indium layers.

It should be noted that the upper operating temperature limit of the bonded rate sensor 10 is determined by the melting point of the fused solder layers 38, i.e. approximately 320°F to 350°F (160°C to 177°C) in the case of indium solder. In the event that a higher operating temperature limit is desired, tin (having a melting point of approximately 450°F to 500°F (232°C to 268°C)) can be substituted for indium. In such a case, the solder coating step would be performed by electrodepositing the tin to a thickness of 0.000050 to 0.000100 inch (0.00127mm to 0.00254mm) on the copper layers 34. The heating step would then be performed by the previously described vapour phase soldering technique, though the inert gas temperature would be maintained in the range of from approximately 450°F (232°C) to approximately 500°F (268°C) for the ten to twenty minute holding period.

Depending upon the type of solder coatings applied to the laminae, it may be necessary to use a suitable flux in the soldering process. For example while no flux is generally required when indium is used, the use of tin as the solder coating medium requires that an appropriate noncorrosive flux be used. If the use of a flux is required, it is generally necessary to subject the bonded sensor to a post-solder cleaning process which comprises placing the sensor in a suitable vapour degreasing atmosphere (such as trichloroethane), draining all the resulting condensate from the internal sensor passages, and then removing any remaining flux using suitable solvents.

From the foregoing, it can be seen that the present invention may provide a long-needed method for economically and accurately fabricating laminated aluminium fluidic devices. It is significant to note that the method may eliminate or minimise the problems and disadvantages commonly associated with conventional methods used in attempting to bond aluminium fluidic laminae.

For example, compared to aluminium "cladding" and diffusion bonding, the present method is significantly less expensive - both from a time and materials standpoint. The very short heating holding time of from ten to twenty minutes represents a drastic bonding time reduction compared to the several hours typically required in either the cladding or diffusion bonding technique. Moreover, the necessity of using costly bonding materials (as in the aluminium cladding process) is eliminated.

Perhaps even more significantly, the method of the present invention can also eliminate the previous problems of stack and internal passage distortion. These are problems which must be avoided to maintain the critical high degree of configurational accuracy necessary in fluidic devices of the type described. Since the bonding temperature employed in the present invention (320°F - 350°F (160°C to 177°C) in the case of indium solder, and 450°F - 500°F (232°C to 268°C) in the case of tin solder) is well below the approximately 600°F (315°C) softening temperature of aluminium, warpage of either the stack or its internal passages may be simply, inexpensively and completely avoided.

Furthermore, since the solder medium is applied prior to the stacking and heating of the laminae, any thickness uniformities in the resulting bond joints (i.e., the fused solder layers) between adjacent laminae can be automatically and very precisely controlled over the entire facing surfaces of the laminae. This prior application of the bonding medium may also effectively eliminate any potential problems of the medium's flow into (and blocking of) the internal fluidic passages, as could well be the case if conventional sweat soldering of the stack were attempted.

On a more fundamental level, the present invention also effectively eliminates the previously encountered problem of soldering aluminuim to aluminium - a problem arising from the difficulty of satisfactorily adhering conventional solder directly to aluminium surfaces. Due to the described zinc and copper coatings sequentially applied to the aluminium surfaces, a surface (i.e., copper) is provided to which solder will satisfactorily adhere.

Because of its weight and cost advantages compared to the conventional stainless steel, aluminium is the preferred laminate material upon which to perform the bonding method of the present invention. However, it has been found that the described bonding method can also be very advantageously used with other nonferruos metallic laminate materials, such as titaniumn, when, for example a higher material strength is desired.

As mentioned, the described aluminium fludic device 10 is an angular rate sensor. The bonding method of the present invention, however, is equally suitable for the fabrication of a wide variety of other aluminium fluidic sensing and control devices such as amplifiers, oscillators, density sensors, switches and the like.

Claims:

1. A method of bonding two non-ferrous metallic laminae (20a, 20b) characterised by: coating a side surface (30) of each laminae (20) with a sub-base layer (32,34); coating each sub-base layer (32,34) with a layer (36) of a bonding material having a melting point lower than the softening point temperature of the laminae (20); positioning the bonding material layers in intimate contact; and fusing the bonding material layers (38) by heating the coated laminae (20).

2. A method as claimed in claim 1 characterised in that a plurality (20a to 20g) of laminae are bonded together as a stack to produce a non-ferrous metallic fluidic device (10).

3. A method as claimed in claim 1 or claims 2 characterised in that applying the sub-base layer is performed by sequentially applying layers of zinc (32) and copper (34) to each of the side surfaces (30).

4. A method as claimed in claim 3 characterised in that the copper (34) is deposited to a thickness of between approimately 0.00010 inch (0.0025mm) and approximately 0.00015 inch (0.0038mm).

5. A method as claimed in any preceding claim characterised in that the bonding material (36) is indium.

6. A method as claimed in claim 5 characterised in that the indium (36) is electrodeposited on each of the copper layers (34) to a thickness of between approximately 0.000030 inch (0.00065mm) and approximately 0.000060 inch (0.00152mm).

7.    A method as claimed in any of claims 1 to 4 characterised in that the bonding material (36) is tin.

8.    A method as claimed in claim 7 characterised in that the tin (36) is electrodeposited on each of the copper layers (34) to a thickness of between approximately 0.000050 inch (0.00127 mm) to approximately 0.000100 inch (0.00254mm).

9.    A method as claimed in any preceding claim characterised in that the bonding material layers (36) are bonded by a vapour phase soldering process.

10.    A method as claimed in claim 9 when dependent upon claim 5 characterised in that the layers (36) of indium are heated to a temperature of between approximately 320°F (160°C) and approximately 350°F (177°C) for approximately ten to twenty minutes.

11.    A method as claimed in claim 9 when dependent upon claim 7, characterised in that the layers of tin (36) are heated to a temperature of between approximately 450°F (232°C) and approximately 500°F (268°C) for approximately ten to twenty minutes.

12. A fluidic device comprising a plurality of nonferrous fluidic laminae (20a to 20g) having facing side surfaces (30) to each of which are sequentially adhered a layer of zinc (32), a layer of copper (34) and a layer of solder (36), the layers of solder (36) being fused to each other (38).

*Fig-1*

*Fig-2A*

*Fig-2B*

*Fig-2C*